Europäisches Patentamt

European Patent Office

Office européen des brevets

(19)

(11) Numéro de publication: **0 477 091 B1**

(12) **FASCICULE DE BREVET EUROPEEN**

(45) Date de publication de fascicule du brevet: **01.02.95**

(51) Int. Cl.[6]: **B01D 61/44**, B01D 69/00

(21) Numéro de dépôt: **91402476.5**

(22) Date de dépôt: **17.09.91**

(54) **Assemblage bipolaire de membranes anionique et cationique et son utilisation.**

(30) Priorité: **20.09.90 FR 9011726**

(43) Date de publication de la demande:
**25.03.92 Bulletin 92/13**

(45) Mention de la délivrance du brevet:
**01.02.95 Bulletin 95/05**

(84) Etats contractants désignés:
**BE DE GB IT NL**

(56) Documents cités:
**EP-A- 0 141 517**
**EP-A- 0 251 511**

**CHEMIE.INGENIEUR.TECHNIK., vol. 56, no. 3, 1984, Weinheim, DE; HEINER STRATHMANN:"Die Elektrodialyse - ein Membranverfahren mit vielen Anwendungsmöglichkeiten"**

(73) Titulaire: **INSTITUT FRANCAIS DU PETROLE**
**4, avenue de Bois Préau**
**F-92502 Rueil-Malmaison (FR)**

(72) Inventeur: **Dezael, Claude**
**60, avenue Saint Germain**
**F-78600 Maisons Laffitte (FR)**
Inventeur: **Gavach, Claude**
**15, rue du Pioch**
**F-34430 Saint Jean de Vedas (FR)**
Inventeur: **Poucelly, Gérard**
**117, Place de Thessalie Antigone**
**F-34000 Montpellier (FR)**
Inventeur: **Raucq, Didier**
**Hameau de Boussagues Latour sur Orb**
**F-34260 Le Bousquet d'Orb (FR)**

**Description**

La présente invention concerne la réalisation d'un ensemble membranaire bipolaire utilisable notamment dans les procédés d'électrodialyse ou d'électro-électrodialyse, en particulier lorsqu'une dissociation de l'eau est requise.

Des membranes bipolaires utilisables dans des procédés d'électrodialyse ont déjà été décrites, par exemple dans le brevet U.S. n° 4.024.043, mais ces membranes présentent des inconvénients, notamment lorsque les solutions à traiter contiennent comme impuretés des ions bivalents et trivalents qui peuvent précipiter sous forme d'hydroxydes sur la membrane, ce qui a pour effet principal de diminuer la capacité d'échange d'ions ou de dissociation de l'eau contenue dans cette membrane bipolaire et pour effet secondaire d'augmenter fortement la résistance électrique de cette membrane.

Dans un autre brevet U.S. n° 4.107.015 il est décrit un agencement d'une membrane anionique et d'une membrane cationique séparées par un compartiment rempli soit d'une solution d'un polymère sulfonique soluble, soit d'un polymère ammonium quaternaire soluble, par exemple une solution d'acide polystyrène sulfonique ou une solution de chlorure de polyvinylbenzène triméthylammonium, soit d'une suspension aqueuse de résine cationique ou anionique insoluble. Cet agencement n'est cependant pas entièrement satisfaisant dans la mesure où les membranes anionique et cationique sont en partie perméables à la solution à traiter ce qui conduit à une pollution du compartiment compris entre les deux membranes par les impuretés de la solution ; il peut donc y avoir précipitation d'hydroxydes de métaux di ou trivalents dans ledit compartiment, ce qui entraîne comme dans le cas précédent une diminution de la capacité d'échange d'ions ou de la capacité de dissociation de l'eau. Il y a donc lieu, lors du fonctionnement de l'électrodialyseur pendant de longues durées, de réaliser la vidange du compartiment central et le remplacement de la solution de polymère cationique ou anionique soluble ou de la suspension de résine cationique ou anionique insoluble.

L'art antérieur est par ailleurs illustré par les documents suivants : EP-A-141.517, EP-A-251.511 et l'article "Die Electrodialyse - ein Membranverfahren mit vielen Anwendungsmöglichkeiten" vol 56, n° 3, 1984 page 214-220, Chem. Ing. Tech.

On a découvert et réalisé ce qui fait l'objet de l'invention, un assemblage membranaire faisant effet de membrane bipolaire et ne présentant pas les inconvénients cités auparavant.

L'assemblage membranaire faisant l'objet de l'invention est caractérisé en ce qu'il comprend essentiellement :

a) un élément membranaire cationique, et

b) un élément membranaire anionique,

les dits éléments étant en contact l'un avec l'autre sur une première partie de leurs faces adjacentes et étant séparés sur une seconde partie des dites faces adjacentes, de manière à constituer au moins un passage pour la circulation d'un fluide depuis un orifice d'admission jusqu'à un orifice de sortie.

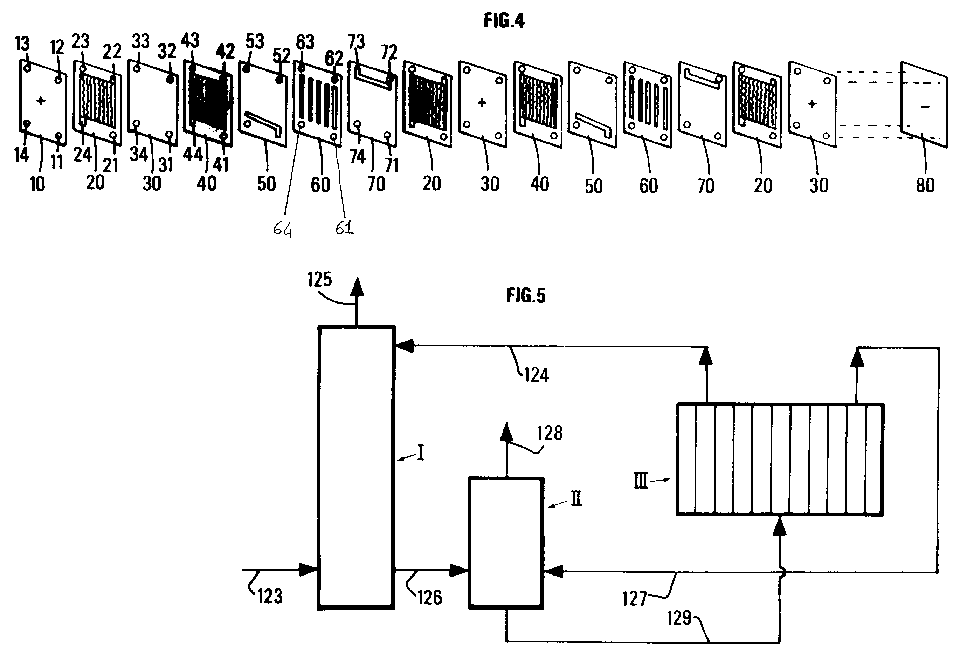

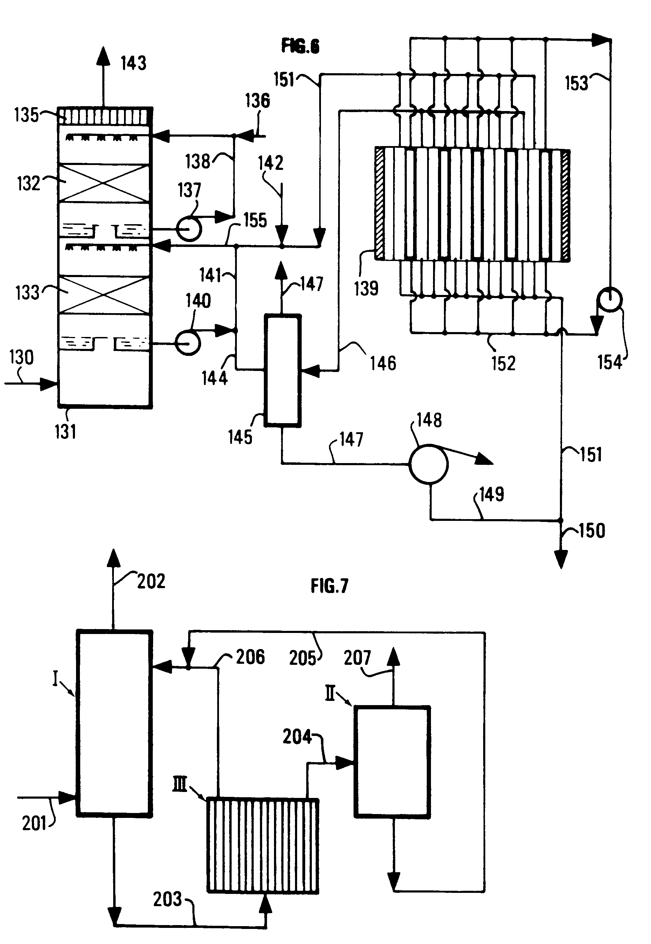

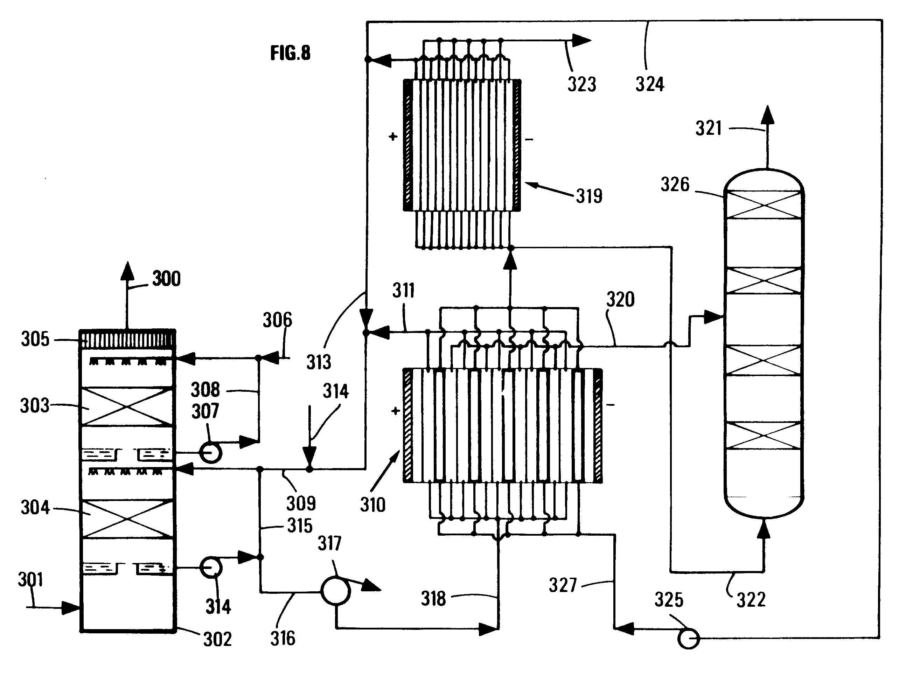

Les figures 1 à 8 illustrent l'invention :

- la figure 1 illustre un premier mode de réalisation,
- les figures 2a et 2b illustrent, en perspective et de profil, un second mode de réalisation,
- la figure 3 illustre un mode de réalisation d'une cellule d'électrodialyse incluant l'assemblage bipolaire de l'invention,
- la figure 4 illustre une réalisation pratique d'un électrodialyseur incluant l'assemblage bipolaire de l'invention,
- la figure 5 illustre le principe d'application d'un électrodialyseur incluant l'assemblage membranaire de l'invention pour la production de $SO_4HNa$ et de $NaOH$ à partir de $SO_4Na_2$ et leur utilisation dans un procédé de lavage de fumées contenant du $SO_2$,
- la figure 6 illustre un procédé réalisant le lavage des fumées et la régénération des liqueurs obtenues par électrodialyse utilisant l'assemblage bipolaire de l'invention pour obtenir une solution de $NaOH$ utilisée pour le lavage des fumées et un effluent concentré en $SO_2$,
- la figure 7 illustre le principe d'application d'un électrodialyseur incluant l'assemblage membranaire de l'invention pour la production de $SO_3Na_2$ et de $SO_3H_2$ à partir de solutions provenant du lavage de fumées contenant du $SO_2$,
- la figure 8 illustre un procédé réalisant le lavage des fumées et la régénération des liqueurs obtenues par électrodialyse utilisant l'assemblage bipolaire de l'invention pour obtenir une solution de $SO_3Na_2$ utilisée pour le lavage des fumées et un effluent concentré en $SO_2$.

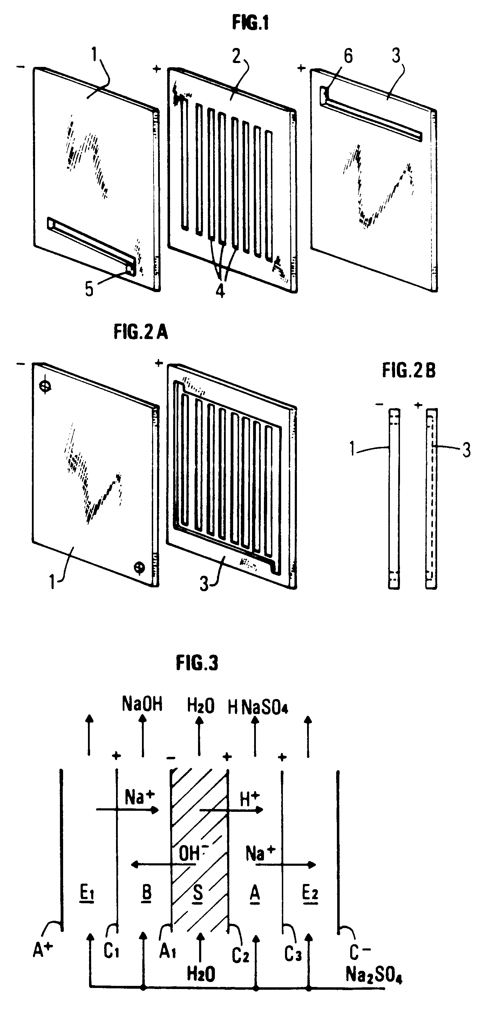

Selon une première forme de réalisation (cf. Figure 1), l'assemblage est caractérisé en ce que l'un des éléments membranaire (cationique ou anionique) est constitué par la juxtaposition d'une première membrane régulière et continue et d'une seconde membrane de même polarité que la première membrane,

comportant des évidements sur la totalité de son épaisseur, lesdits évidements constituant ledit passage pour un fluide, le contact avec l'élément membranaire de signe opposé se faisant sur ladite membrane comportant des évidements .

Selon une seconde forme de réalisation (cf. Figures 2), l'assemblage est caractérisé en ce que l'un des éléments membranaires présente une surface régulière sur la totalité de sa face en contact et l'autre élément membranaire comporte une première partie régulière assurant un contact continu avec le premier élément et une seconde partie comportant des évidements sur une partie seulement de son épaisseur, lesdits évidements constituant ledit passage pour un fluide.

Selon une troisième forme de réalisation, l'assemblage est caractérisé en ce que les deux éléments membranaires sont constitués chacun par la juxtaposition d'une première membrane régulière et continue et d'une seconde membrane de même polarité que la première membrane comportant des évidements sur la totalité de son épaisseur ; les évidements d'un éléments membranaire coopérant avec les évidements de l'élément membranaire de polarité opposée pour constituer ledit passage.

La membrane cationique (3) peut être telle que décrite dans le brevet U.S. n°3.705.846 ou telle que l'on peut trouver chez des fabricants de membranes échangeuses d'ions, par exemple chez ASAHI GLASS CORP., où chez IONICS, où encore chez TOKUYAMA SODA, ou encore chez MORGANE. Dans la réalisation de la fig.1, la dite membrane comporte des moyens appropriés (canaux) (6) permettant l'alimentation en eau ou en solution saline du séparateur décrit plus loin.

Les caractéristiques préférées des membranes cationiques utilisables sont les suivantes :
- polymère, sous forme de film, comportant des groupements sulfoniques ou phosphoriques ;
- la capacité d'échange de cations de la membrane peut être comprise entre 0,1 et 3 équivalents et de préférence entre 0,5 et 2,5 équivalents par kilogramme de membrane sèche ;
- la teneur en eau de ces membranes lorsqu'elles sont saturées en eau peut être comprise entre 5 et 50 pour cent en poids et de préférence entre 20 et 40 pour cent en poids ;
- l'épaisseur de la membrane est généralement comprise entre 10 et 500 micromètres et de préférence entre 70 et 250 micromètres ;
- la résistance électrique de la membrane est généralement comprise entre 0,1 et 6 ohm/cm$^2$ et de préférence entre 1 et 3 ohm/cm$^2$ ;
- le séparateur (2) est constitué d'un matériau polymérique cationique (c'est le cas sur la fig.1) ou anionique ou amphotère comportant des moyens appropriés permettant le passage de part en part de l'eau ou d'une solution saline pour réaliser l'électrolyse de l'eau.

Ces moyens peuvent être : un matériau suffisamment poreux permettant un écoulement interne, des canaux rectilignes ou sinueux (4), des picots et tous moyens permettant de réaliser un espacement entre les membranes cationique et anionique situées aux extrémités dudit assemblage.

La membrane anionique (1) peut être telle que décrite dans le brevet U.S. n°3.705.845 précédemment cité ou telle que l'on peut la trouver chez les fabricants de membranes, par exemple chez ASAIII GLASS CO., ou IONICS ou TOKUYAMA SODA, ou encore MORGANE.

Ladite membrane comporte des moyens appropriés (canaux) (5) permettant l'évacuation en eau ou en solution saline du séparateur déjà décrit.

Les caractéristiques préférées des membranes anioniques utilisables sont les suivantes :
- polymère, sous forme de film, comportant des groupements ammonium quaternaire ;
- la capacité d'échange d'anions peut être comprise entre 0,1 et 3 équivalents et de préférence entre 0,7 et 2 équivalents par kilogramme de membrane sèche ;
- la teneur en eau de ces membranes, lorsqu'elles sont saturées en eau, peut être comprise entre 5 et 50 pour cent en poids et de préférence entre 20 et 40 pour cent en poids ;
- l'épaisseur de la membrane anionique est généralement comprise entre 10 et 500 micromètres et de préférence entre 70 et 250 micromètres ;
- la résistance électrique des membranes anioniques est généralement comprise entre 0,1 et 7 ohm/cm$^2$ et de préférence entre 1 et 3,5 ohm/cm$^2$.

Dans une autre version de l'invention, chaque membrane (cationique et anionique) est associée à une membrane perforée de même polarité, dont les canaux respectifs coopérent pour créer le circuit de liquide.

Dans une autre version de l'invention, l'assemblage membranaire vu en perspective (fig.2A) et en coupe (fig.2B) est constitué d'une membrane cationique (3), comportant sur une des faces des sillons (4) rectilignes ou sinueux ou tout autre moyen connu par l'homme de l'art pour aménager un espace entre les membranes permettant la circulation d'un liquide, cette face étant placée en regard d'une membrane anionique pleine(1).

L'ensemble membranaire peut également être réalisé par juxtaposition d'une membrane cationique pleine et d'une membrane anionique comportant sur la face en regard de la membrane cationique des sillons ou tout autre moyen permettant la circulation d'un liquide entre les deux membranes.

La vitesse d'écoulement de l'eau ou de la solution saline dans le circuit des membranes anionique et/ou cationique peut varier dans de grandes proportions, elle est, en général, comprise entre 0,01 et 1 cm/min. et de préférence entre 0,2 et 0,6 cm/min.

La concentration de la solution circulant dans le circuit, entre les membranes, peut également varier dans de grandes proportions ; elle peut être comprise entre 0 (eau pure) et la limite de solubilité du sel employé, elle sera avantageusement comprise entre 0,1 et 3 moles de sels/litre ; elle pourra, dans certains cas être supérieure à celle de la solution à électrodialyser, ce qui a pour effet de diminuer fortement la diffusion des ions vers le compartiment séparateur et à travers les membranes et en particulier celle des cations di et trivalents, cause de l'empoisonnement des membranes.

Les solutions salines utilisables pour réaliser l'électrodialyse, avec production d'une solution acide et d'une solution basique, comprennent les solutions des sels d'acide fort ou faible avec des bases fortes ou faibles, lesdits sels ayant des anions minéraux ou organiques, par exemple les sels contenant les anions :

$$Cl^-, SO_4^{2-}, SO_3^{2-}, PO_4^{3-}, NO_3^-, CH_3COO^-, C_2H_5COO^-$$

et des cations minéraux ou organiques, tels que $Na^+$, $NH_4^+$, $K^+$ et les ions ammonium quaternaires (amines par exemple).

La figure (3) donne une représentation d'un électrodialyseur comportant un seul ensemble membranaire faisant l'objet de l'invention, réalisant la dissociation de l'eau pour produire une solution acide et une solution basique à partir d'un sel alcalin, par exemple une solution de $Na_2SO_4$.

L'électrodialyseur comprend :

1. une anode $A^+$,
2. un espace E1 permettant d'amener de la solution à traiter,
3. une membrane cationique C1,
4. un espace B permettant d'amener de la solution à traiter,
5. une membrane anionique A1,
6. un séparateur S permettant la circulation d'eau ou d'une solution saline, tel celui faisant l'objet d'une des formes de l'invention.
7. une membrane cationique C2,
8. un espace A permettant d'amener de la solution à traiter,
9. une membrane cationique C3,
10. un espace E2 permettant d'amener de la solution à traiter,
11. une catode $C^-$.

Lorsqu'on effectue dans ce système une électrodialyse d'une solution de $Na_2SO_4$ il va se produire, sous l'effet du courant électrique, plusieurs phénomènes :

- migration des cations vers la catode
- migration des anions vers l'anode
- dissociation de l'eau en $H^+$ et $OH^-$ et migration des ions formés respectivement vers la catode et vers l'anode.

Au cours de la migration, les ions vont rencontrer des membranes, les cations pourront traverser les membranes cationiques mais ne pourront pas traverser les membranes anioniques, à l'inverse les anions pourront traverser les membranes anioniques mais ne pourront pas traverser les membranes cationiques.

Les densités de courant généralement admises dans un tel ensemble membranaire peuvent être comprises entre 10 et 100 mA/cm² et de préférence entre 50 et 200 mA/cm².

La différence de potentiel observée de part et d'autre d'un ensemble membranaire dépend de la densité de courant traversant ledit ensemble ; elle est généralement comprise entre 0,9 et 4 volt mais sera de préférence comprise entre 0,9 et 3 volt.

On alimente en solution de sulfate de sodium les compartiments E1, B, A, E2 et en eau le compartiment S (ou le circuit créé à la surface de l'une des membranes, cas de la fig.2) et on établit une tension électrique entre l'anode $A^+$ et la catode $C^-$.

Sous l'effet du courant les ions $Na^+$ du compartiment E1 se déplacent vers la catode, ils peuvent traverser la membrane cationique C1 et se retrouvent dans le compartiment B ; les ions $OH^-$ provenant de la dissociation de l'eau dans le compartiment S traversent la membrane anionique A1 et se retrouvent dans le compartiment B où ils se combinent avec les ions $Na^+$ pour former NaOH. De la même façon les ions $Na^+$ du compartiment A migrent à travers la membrane cationique C3 vers le compartiment cathodique E2. Les ions $H^+$ provenant de la dissociation de l'eau du compartiment S traversent la membrane cationique C2 et se retrouvent dans le compartiment A et forment avec $SO_4Na_2$ du sulfate acide de sodium $SO_4HNa$. On

recueille donc en sortie du compartiment B une solution basique de NaOH et en sortie du compartiment A une solution acide de $SO_4HNa$.

Il est entendu que les précautions usuelles sont prises pour rendre les compartiments étanches.

La figure (4) présente une réalisation pratique d'un électrolyseur permettant la production d'une solution basique et d'une solution acide à partir d'un sel utilisant l'assemblage membranaire faisant l'objet de l'invention ; cet électrolyseur comporte les éléments suivants :

1) une anode en acier inoxydable (10) comportant 4 tubulures permettant :
- l'alimentation de la solution à traiter (14),
- l'alimentation en eau du séparateur membranaire (11),
- l'évacuation de la solution traitée (12),
- l'évacuation de l'eau du séparateur membranaire (13),

2) un séparateur (20) en un matériau polymérique comportant :
- un passage pour l'eau d'alimentation du séparateur bipolaire (21) et un passage pour l'eau d'évacuation du séparateur bipolaire (23),
- un évidement interne contenant un matériau polymérique poreux cationique, anionique ou amphotère permettant le passage de la solution à traiter et des passages pour l'alimentation en solution à traiter (24),

3) une membrane cationique (30) comportant quatre passages pour l'alimentation et l'évacuation en eau du séparateur et l'alimentation (34) et l'évacuation de la solution traitée (33),

4) un séparateur (40) identique à celui décrit en 2,

5) une membrane anionique (50) comportant un orifice permettant le passage de la solution à traiter (54), de la solution traitée (52) et de la sortie d'eau du séparateur membranaire, objet de l'invention (53), elle comporte également un système d'alimentation, sous forme d'une découpe appropriée, en eau du séparateur placé derrière elle,

6) un séparateur (60) en matériau membranaire cationique comprenant des orifices 61, 62, 63, 64 permettant le passage des solutions à traiter et le passage de l'eau dans l'ensemble membranaire, et des passages appropriés, par exemple des passages rectilignes verticaux découpés dans la membrane,

7) une membrane cationique (70) comprenant des orifices 71, 72, 73, 74 permettant le passage des solutions à traiter et de l'eau, elle comporte également un système d'évacuation de l'eau intermembranaire 13,

8) à 15) - on recommence un empilement de séparateurs et de membranes suivant 20, 30, 40, 50, 60, 70, 20, 30,

16) on termine l'ensemble de l'électrodialyseur par une catode en acier inoxydable (80).

Bien entendu le nombre d'ensembles membranaires peut être très important, il peut être compris par exemple entre 1 et 1.000, mais de préférence entre 20 et 200.

EXEMPLE D'APPLICATION I

On utilise un électrolyseur comportant l'ensemble membranaire faisant l'objet de la présente invention pour générer, à partir d'une solution de sulfate de sodium une solution de sulfate acide de sodium et une solution basique de NaOH utilisables dans un procédé d'élimination d'oxydes de soufre des fumées. (Schéma simplifié figure (5)).

On introduit par la ligne (123) une fumée contenant du $SO_2$ dans un laveur I où elle est mise en contact avec une solution de NaOH provenant de l'électrodialyseur III par la ligne (124). La fumée épurée sort du laveur par la ligne (125). En fond de laveur on recueille une solution de sulfite acide de sodium que l'on envoie par la ligne (126) vers un réacteur II où elle mise en contact avec une solution de $SO_4HNa$ provenant de l'électrodialyseur par la ligne (127). Au contact du sulfate acide de sodium il se produit la réaction chimique suivante :

$$SO_3HNa + SO_4HNa \rightarrow SO_2 + SO_4Na_2 + H_2O$$

Il y a production de $SO_2$ pur, qui sort par la ligne (128), et production de $SO_4Na_2$. Le sulfate neutre de sodium produit au réacteur II est envoyé par la ligne (129) vers l'électrodialyseur III où se produit la séparation du sulfate de sodium en NaOH et en $SO_4HNa$.

On comprendra mieux le fonctionnement réel de l'unité en se reportant à la figure (6).

Un effluent gazeux prélevé au carneau d'une cheminée de centrale thermique à raison de 5.000 $Nm^3/h$ et dont la composition est la suivante :

5

| N$_2$ | 72.326 %, |
|---|---|
| CO$_2$ | 14,24 %, |
| H$_2$O | 11,23 %, |
| O$_2$ | 2 %, |
| SO$_2$ | 0,2 %, |
| SO$_3$ | 0,004 % |

est envoyé par la ligne (130) dans un laveur (131) comportant 2 étages de lavage (132 et 133) chaque étage étant constitué de plateaux à déversoir. Le laveur comporte en tête un dévésiculeur (135). On envoie à l'étage de tête par la ligne (136) de l'eau provenant d'un condensat à raison de 52.96 Kg/h, qui est recirculée à l'étage (132) par la pompe (137), et par la ligne (138). On envoie par la ligne (155) à raison de 66,45 Kg/h, une solution basique provenant de l'électrodialyseur (139) par la ligne (151), dont la composition massique est :

| NaOH | 24,98 %, |
|---|---|
| Na$_2$SO$_4$ | 4,43 %, |
| H$_2$O | 70,59 %, |
| et un appoint de NaOH à 20 % poids est amené par la ligne 142 (débit 12,24 Kg/h). | |

Cette solution est recirculée autour de l'étage (133) par la pompe (140) et la ligne (141). La fumée épurée en SO$_2$ et en SO$_3$ sort par la ligne (143), elle a la composition volumique suivante :

| SO$_2$ | 0,004 %, |
|---|---|
| SO$_3$ | 0,00008 %, |
| N$_2$ | 71,64 %, |
| CO$_2$ | 14,10 %, |
| H$_2$O | 12,26 %, |
| O$_2$ | 2 %. |

On recueille à l'étage de fond de laveur à raison de 103,46 Kg/h une solution de sulfite acide de sodium et de sulfate de sodium, dont la composition massique est :

| SO$_4$Na$_2$ | 7,04 %, |
|---|---|
| SO$_3$HNa | 41,32 %, |
| H$_2$O | 51,63 %, |

qui est envoyée par la ligne (144) à un réacteur (145) où elle est mise en contact et réagit avec une solution de sulfate acide de sodium provenant de l'électrodialyseur par la ligne (146) dont le débit est de 99,67 Kg/h et la composition massique est :

| SO$_4$HNa | 49,98 %, |
|---|---|
| SO$_4$Na$_2$ | 2,95 %, |
| H$_2$O | 47,06 %. |

Il ressort en tête de réacteur par la ligne (147) du SO$_2$ dont la pureté est de 98 % en SO$_2$ et de 2 % en eau, avec un débit de 26,72 Kg/h. La solution issue du réacteur (145) est envoyée par la ligne (147) au filtre (148) où l'ou récupère les produits insolubles provenant de la fumée traitée et de l'eau de lavage (sulfate de calcium par exemple). Le filtrat est envoyé, par la ligne (149) et (151), à raison 158,65 Kg/h à l'électrodialyseur (139) et en partie vers une purge à raison de 10,66 Kg/h par la ligne (150), la composition massique de la solution est :

| SO$_4$Na$_2$ | 40,86 %, |
|---|---|
| H$_2$O | 59,13 %. |

Après passage dans l'électrodialyseur la solution acide produite est envoyée par la ligne (146) au réacteur (145) déjà citée. La solution basique également produite à l'électrodialyseur est envoyée par la ligne (151) à l'étape de lavage de fumées.

L'électrodialyseur est constitué de 20 cellules membranaires faisant l'objet de l'invention. Chaque cellule mesure 50 cm par 50 cm, la densité de courant est de 100 mA/cm$^2$ et la chute de tension de 1,00 volt par cellule, la puissance totale fournie à l'électrodialyseur, pour l'exemple I, est de 5,325 kilowatts.

Les séparateurs de l'électrodialyseur correspondent au premier mode de réalisation décrit, c'est-à-dire que l'assemblage est composé d'une première membrane cationique régulière, d'une seconde membrane cationique comportant des évidements sur la totalité de son épaisseur permettant le passage d'une solution aqueuse de sels et d'une troisième membrane anionique. L'épaisseur de la première membrane cationique est de 100 micromètres, celle de la membrane comportant les évidements de 100 micromètres, celle de la membrane anionique également de 100 micromètres.

Les séparateurs de l'ensemble des cellules sont alimentés en solution de SO$_4$Na$_2$ à 30 % poids, par la ligne (152) et la pompe (154), la solution sortante est recyclée par la ligne (153) et la pompe (154) à l'entrée de l'électrodialyseur à raison de 150 Kg/h. Un léger appoint de solution de SO$_4$Na$_2$ permet de compenser les variations de concentration observées durant un fonctionnement de longue durée. Dans ces conditions on n'observe pas de diminution de performances de l'électrodialyseur dans le temps.

## EXEMPLE D'APPLICATION II

On utilise un électrodialyseur comportant l'ensemble membranaire faisant l'objet de la présente invention pour générer, à partir d'une solution de sulfite acide de sodium provenant d'une étape de lavage de fumées contenant des oxydes de soufre, un effluent concentré en SO$_2$ et une solution contenant du sulfite neutre de sodium, solution utilisée dans l' étape de lavage. (Figure (7) schéma simplifié).

On introduit par la ligne (201) une fumée contenant du SO$_2$ dans un laveur I où elle est mise en contact avec une solution de sulfite neutre de sodium, SO$_3$Na$_2$, provenant de l'électrodialyseur III. La fumée épurée sort du laveur par la ligne (202). En fond de laveur on recueille une solution de sulfite acide de sodium que l'on envoie par la ligne (203) vers l'électrodialyseur III. Dans l'électrodialyseur se produit la séparation du sulfite acide de sodium en SO$_3$Na$_2$ et en SO$_3$H$_2$. La solution de sulfite neutre de sodium issue de l'électrodialyseur est envoyée en tête de laveur par la ligne (206).

Par la ligne (204) on soutire la solution d'acide sulfureux et on l'envoie au strippeur II où se produit la décomposition de la solution d'acide sulfureux suivant la réaction :

$$SO_3H_2 \rightarrow H_2O + SO_2$$

et l'on recueille en tête du SO$_2$ pur, par la ligne (207), et en fond de l'eau qui est recyclée au laveur par la ligne (205) avec la solution de SO$_3$Na$_2$ issue de l'électrodialyseur.

On comprendra mieux le fonctionnement réel et l'utilité du système préconisé en se reportant à la figure (8) et à la description qui en est faite.

Un effluent gazeux prélevé au carneau d'une cheminée de centrale thermique à raison de 5.000 Nm$^3$/h et dont la composition volumique est la suivante:

| N$_2$ | 72,796 %, |
|---|---|
| CO$_2$ | 14 %, |
| O$_2$ | 2 %, |
| H$_2$O | 11 %, |
| SO$_2$ | 0,2 %, |
| SO$_3$ | 0,004 % |

est envoyé par la ligne (301) dans un laveur (302) comportant deux étages de lavage (303 et 304), chaque étage de lavage étant constitué de plateaux à déversoir. Le laveur comporte en tête un dévésiculeur (305). On envoie à l'étage de tête par la ligne (306) un appoint d'eau dont le débit est de 35 Kg/h.

La solution recueillie sur l'étage (303) est recirculée au dit étage par la pompe (307) et la ligne (308).

On introduit par la ligne (309) sur l'étage de fond du laveur (304) une solution basique provenant de l'électrodialyseur (310) par la ligne (311), une solution provenant de l'électrodialyseur (319) par la ligne (313), et un appoint de NaOH par la ligne (314).

La composition de la ligne (311) est la suivante :

| | |
|---|---|
| $SO_3Na_2$ | 37,17 %, |
| $SO_4Na_2$ | 4,89 %, |
| $H_2O$ | 57,93 %, |
| débit de 154,62 Kg/h. | |

celle de la ligne (313) :

| | |
|---|---|
| $SO_4Na_2$ | 0,1 %, |
| $H_2O$ | 99,9 %, |
| débit 35 Kg/h | |

celle de la ligne (314) :

| | |
|---|---|
| NaOH | 20 %, |
| $H_2O$ | 80 %, |
| débit | 12,48 Kg/h. |

La solution recueillie sur le plateau de l'étage (304) est recirculée sur le dit étage grâce à la pompe (314) et la ligne (315).

La solution provenant de l'étage de fond du laveur est envoyée à raison de 220,8 Kg/h par la ligne (316) à un filtre (317) qui permet d'éliminer les impuretés insolubles dans la solution (poussiéres recueillies dans l'étape de lavage, sulfate de calcium), sa composition est la suivante :

| | |
|---|---|
| $SO_3HNa$ | 39,07 %, |
| $SO_3Na_2$ | 2,36 %, |
| $SO_4Na_2$ | 4,67 %, |
| $SO_4Na_2$ | 4,72 %, |
| $H_2O$ | 53,85 %. |

La solution filtrée est envoyée par la ligne (318) à l'électrodialyseur (310) faisant l'objet de l'invention. Dans l'électrodialyseur (310) se produit, sous l'action du courant électrique, la transformation du sulfite acide de sodium en sulfite neutre de sodium et en acide sulfureux suivant la réaction :

$$2SO_3HNa + H_2O \rightarrow SO_3Na_2 + SO_3H_2$$

En sortie d'électrodialyseur on obtient deux flux :
- un flux de solution basique qui est envoyé à l'étage de lavage des fumées par la ligne (311), et
- un flux de solution acide, dont la composition est :

| | |
|---|---|
| $SO_3H_2$ | 37,17 % ; |
| $SO_4Na_2$ | 4,89 % ; |
| $H_2O$ | 57,93 %. |
| qui est envoyé au strippeur (326) par la ligne (320). | |

On obtient en tête de strippeur par la ligne (321) du $SO_2$ quasiment pur ($SO_2$ : 99,44 % ; $H_2O$ : 0,56 %) et une solution de $SO_4Na_2$ par la ligne (322) qui est envoyée à l'électrodialyseur (319) qui permet d'obtenir une solution concentrée en sulfate de sodium (28,8 % poids), qui est purgée hors du circuit par la ligne (323) à raison de 15,395 Kg/h, et une solution très appauvrie en sel qui est envoyée d'une part au laveur (302) par la ligne (313) et d'autre part vers les séparateurs de l'électrodialyseur (310) faisant l'objet de l'invention par les lignes (324), la pompe (325) et les lignes (327).

L'électrolyseur (310) est le même que celui de l'exemple précédent mais la tension à chaque cellule est plus faible, elle est de 0,95 volt par cellule ce qui conduit à une puissance totale de : 5,058 Kilowatts.

Le séparateur de l'électrodialyseur correspond au second mode de réalisation décrit, c'est-à-dire que l'assemblage est composé d'une première membrane cationique régulière et d'une seconde membrane anionique comportant des évidements sur une partie seulement de l'épaisseur, évidements réalisés lors du moulage de la membrane. L'épaisseur de la membrane cationique est de 100 micromètres, celle de la membrane anionique de 200 micromètres. L'électrolyseur (319) est un électrolyseur classique de type dessaliniseur comportant 20 cellules de 50 par 50 cm, la puissance électrique absorbée est de : 1,05 Kilowatt.

## Revendications

1. Assemblage membranaire formant une membrane bipolaire utilisable notamment pour la dissociation de l'eau par électrodialyse, caractérisé en ce qu'il comprend essentiellement :
   a) un élément membranaire cationique, et
   b) un élément membranaire anionique,
   lesdits éléments étant en contact l'un avec l'autre sur une première partie de leurs faces adjacentes et étant séparés sur une seconde partie des dites faces adjacentes, de manière à constituer au moins un passage pour la circulation d'un fluide depuis un orifice d'admission jusqu'à un orifice de sortie.

2. Assemblage selon la revendication 1, caractérisé en ce que l'un des éléments membranaires présente une surface régulière sur la totalité de sa face en contact et l'autre élément membranaire comporte une première partie réguliére assurant un contact continu avec le premier élément et une seconde partie comportant des évidements sur une partie seulement de son épaisseur, lesdits évidements constituant ledit passage pour un fluide.

3. Assemblage membranaire selon la revendication 1, caractérisé en ce que l'un des éléments membranaires (cationique ou anionique) est constitué par la juxtaposition d'une première membrane de surface réguliére et continue et d'une seconde membrane de même polarité, comportant sur la totalité de son épaisseur, lesdits évidements constituant ledit passage pour un fluide, le contact avec l'élément membranaire de signe opposé se faisant sur ladite membrane comportant des évidements.

4. Assemblage selon la revendication 3, caractérisé en ce que les deux membranes juxtaposées sont des membranes cationiques.

5. Assemblage selon la revendication 3, caractérisé en ce que les deux membranes juxtaposées sont des membranes anioniques.

6. Assemblage selon la revendication 1, caractérisé en ce que les deux éléments membranaires sont constitués chacun par la juxtaposition d'une première membrane de surface réguliére et continue et d'une seconde membrane de même polarité que la premiére membrane, comportant des évidements sur la totalité de son épaisseur, les évidements d'un élément membranaire coopérant avec les évidements de l'élément membranaire de polarité opposée pour constituer ledit passage.

7. Assemblage selon l'une des revendications 3 à 5, caractérisé en ce que chaque membrane comporte des évidements a une épaisseur de 50 à 200 micromètres.

8. Utilisation d'un assemblage membranaire suivant l'une des revendications 1 à 7 dans un procédé électrochimique utilisant la dissociation de l'eau, en particulier dans un procédé d'électrodialyse ou d'électro-électrodialyse.

9. Utilisation selon la revendication 8, dans laquelle on soumet à l'électrodialyse, au contact d'un assemblage membranaire selon l'une des revendications 1 à 7, une solution de sulfite ou sulfate de métal alcalin, afin de produire, dans des compartiments séparés :
   (a) une solution dont la concentration en OH$^-$ est augmentée et

EP 0 477 091 B1

(b) une solution dont la concentration en H$^+$ est augmentée, la solution enrichie en OH$^-$ étant utilisée pour éliminer par lavage le SO$_2$ de gaz en contenant, la solution enrichie en H$^+$ étant utilisée pour déplacer le SO$_2$ de solution de sulfites de métaux alcalins ou de sulfites possédant des cations organiques.

**Claims**

1. Membrane assembly forming a bipolar membrane particularly for use in dissociation of water by electrodialysis, characterised in that it comprises:
   a) a cationic membrane element, and
   b) an anionic membrane element,
   said elements being in mutual contact over a first portion of their adjacent faces and being separated from each other over a second portion of said adjacent faces, such that at least one passage for circulation of a fluid from an inlet orifice to an outlet orifice is formed.

2. Assembly according to claim 1, characterised in that one of the membrane elements has a regular surface over the entire face which is in contact and the other membrane element comprises a first regular portion for continuous contact with the first element and a second portion comprising recesses through only a portion of its thickness, said recesses constituting said passage for fluid.

3. Membrane assembly according to claim 1, characterised in that one of the membrane elements (cationic or anionic) is constituted by the juxtaposition of a first membrane with a regular and continuous surface and a second membrane with the same polarity and comprising recesses extending through its entire thickness, said recesses constituting said passage for fluid, contact with the membrane element having the opposite sign being effected via said membrane which comprises recesses.

4. Assembly according to claim 3, characterised in that the two juxtaposed membranes are cationic membranes.

5. Assembly according to claim 3, characterised in that the two juxtaposed membranes are anionic membranes.

6. Assembly according to claim 1, characterised in that the two membrane elements are each constituted by the juxtaposition of a first membrane with a regular continuous surface and a second membrane with the same polarity as the first membrane and containing recesses extending through its entire thickness, the recesses of one membrane element cooperating with the recesses of the membrane element with the opposite polarity to constitute said passage.

7. Assembly according to any one of claims 3 to 5, characterised in that each membrane comprises recesses having a thickness of 50 to 200 micrometers.

8. Use of a membrane assembly in accordance with any one of claims 1 to 7 in an electrochemical process involving dissociation of water, in particular in an electrodialysis or electro-electrodialysis process.

9. Use according to claim 8 wherein a membrane assembly as claimed in any one of claims 1 to 7 is employed to electrodialyse a solution of an alkaline metal sulphite or sulphate to produce, in separate compartments:
   (a) a solution wherein the concentration of OH$^-$ is increased, and
   (b) a solution wherein the concentration of H$^+$ is increased,
   the OH$^-$ enriched solution being used to eliminate SO$_2$ from a gas containing it by scrubbing, and the H$^+$ enriched solution being used to displace SO$_2$ from a solution of alkaline metal sulphites or sulphites containing organic cations.

**Patentansprüche**

1. Membranförmige Anordnung, die eine bipolare Membran bildet, verwendbar insbesondere zur Dissoziation von Waser durch Elektrodialyse, dadurch gekennzeichnet, daß sie im wesentlichen
   a) ein kationisches membranförmiges Element und
   b) ein anionisches membranförmiges Element
   umfaßt, wobei die Elemente miteinander über einen ersten Teil ihrer benachbarten Flächen in Kontakt stehen und über einen zweiten Teil der benachbarten Flächen getrennt sind, derart, um wenigstens einen Durchlaß für die Zirkulation eines Fluids von einer Einlaßöffnung zu einer Auslaßöffnung zu bilden.

2. Anordnung nach Anspruch 1, dadurch gekennzeichnet, daß das eine der membranförmigen Elemente eine gleichförmige Oberfläche über die Gesamtheit ihrer in Kontakt stehenden Fläche aufweist und das andere membranförmige Element einen ersten gleichförmigen Teil, der einen ständigen Kontakt mit dem ersten Element sicherstellt, und einen zweiten Teil, der Vertiefungen über nur einen Teil seiner Dicke umfaßt, welche den Durchlaß für ein Fluid bilden, umfaßt.

3. Membranförmige Anordnung nach Anspruch 1, dadurch gekennzeichnet, daß das eine (kationische oder anionische) der membranförmigen Elemente durch die Juxtaposition von einer ersten Membran von gleichförmiger und fortgesetzter Oberfläche und von einer zweiten Membran von gleicher Polarität, welche Vertiefungen über die Gesamtheit ihrer Dicke umfaßt, gebildet ist, wobei die Vertiefungen den Durchlaß für ein Fluid bilden, der Kontakt mit dem membranförmigen Element von entgegengesetztem Vorzeichen auf der die Vertiefungen tragenden Membran erfolgt.

4. Anordnung nach Anspruch 3, dadurch gekennzeichnet, daß die zwei juxtapositionierten Membranen kationische Membranen sind.

5. Anordnung nach Anspruch 3, dadurch gekennzeichnet, daß die zwei juxtapositionierten Membranen anionische Membranen sind.

6. Anordnung nach Anspruch 1, dadurch gekennzeichnet, daß die zwei membranförmigen Elemente jeweils durch die Juxtaposition von einer ersten Membran von gleichförmiger und fortgesetzter Oberfläche und von einer zweiten Membran von gleicher Polarität wie die erste Membran, welche Vertiefungen über die Gesamtheit ihrer Dicke umfaßt, gebildet sind, wobei die Vertiefungen des einen membranförmigen Elements mit den Vertiefungen des membranförmigen Elements von entgegensetzter Polarität zusammenwirken, um den Durchlaß zu bilden.

7. Anordnung gemäß einem der Ansprüche 3 bis 5, dadurch gekennzeichnet, daß jede Membran Vertiefungen mit einer Tiefe von 50 bis 200 Mikrometern umfaßt.

8. Verwendung einer membranförmigen Anordnung gemäß einem der Ansprüche 1 bis 7 in einem elektrochemischen Verfahren, das die Dissoziation von Wasser verwendet, insbesondere in einem Elektrodialyse- oder Elektro-Elektodialyse-Verfahren.

9. Verwendung gamäß Anspruch 8, wobei man der Elektrodialyse im Kontakt mit einer membranförmigen Anordnung gemäß einem der Ansprüche 1 bis 7 eine Lösung von Sulfit oder Sulfat von alkalischen Metallen unterwirft, um in getrennten Chargen
   (a) eine Lösung, deren Konzentration an $OH^-$ erhöht ist, und
   (b) eine Lösung, deren Konzentration an $H^+$ erhöht ist, wobei die mit $OH^-$ angereicherte Lösung verwendet wird, um das $SO_2$ des enthaltenen Gases durch Waschung zu eliminieren, und die mit $H^+$ angereicherte Lösung verwendet wird, um das $SO_2$ der Lösung von Sulfiten der alkalischen Metalle oder von organische Kationen besitzenden Sulfiten zu ersetzen,
   zu erzeugen.

## FIG.1

## FIG.2 A

## FIG.2 B

## FIG.3

FIG.4

FIG.5

EP 0 477 091 B1

**FIG.6**

**FIG.7**

FIG.8